# EUROPÄISCHE PATENTSCHRIFT

(11) **EP 1 089 033 B1**
(45) Veröffentlichungstag und Bekanntmachung des Hinweises auf die Patenterteilung: **26.04.2006**
(21) Anmeldenummer: 00119707.8
(22) Anmeldetag: 09.09.2000
(51) Int. Cl.: F21S 8/10, B60Q 1/26, F21W 101/14

(54) **Lichttechnische Einrichtung für Fahrzeuge**
Vehicle lighting assembly
Dispositif d' éclairage pour véhicules

(30) Priorität: 30.09.1999 DE 19946850
(43) Veröffentlichungstag der Anmeldung: 04.04.2001
(73) Patentinhaber: Hella KGaA Hueck & Co., 59552 Lippstadt (DE)
(72) Erfinder: Henneböhle, Klaus, 33142 Büren-Steinhausen (DE); Püttmann, Heinz-Albert, 59077 Hamm (DE)

(56) Entgegenhaltungen:
- EP-A- 0 931 697
- US-A- 5 552 969
- PATENT ABSTRACTS OF JAPAN vol. 016, no. 051 (M-1209), 10. Februar 1992 (1992-02-10) -& JP 03 252001 A (STANLEY ELECTRIC CO LTD), 11. November 1991 (1991-11-11)

## Beschreibung

Die Erfindung betrifft eine lichttechnische Einrichtung für Fahrzeuge insbesondere Leuchte für Fahrzeuge mit dem Merkmalen nach dem Oberbegriff des Anspruchs.

Eine solche lichttechnische Einrichtung für Fahrzeuge ist aus der JP - A - 03252001 bekannt. Die Einrichtung ist eine Heckleuchte für Fahrzeuge mit einem Lichtgehäuse und einer das Lichtgehäuse abdeckenden lichtdurchlässigen Abschlussscheibe. Im Inneren der Heckleuchte ist ein Rückstrahler auf einem separaten Teil angeordnet, das an der Rückseite des Lichtgehäuses angebracht ist. Dem Rückstrahler ist ein optikfreier und glatter Bereich der Abschlussscheibe zugeordnet. Das den Rückstrahler aufweisende separate Teil weist auf der der Abschlussscheibe zugewandten Seite Optikflächen des Rückstrahlers auf, die mit einer Reflexionsschicht versehen sind. Die Optikflächen sind so ausgebildet, dass Lichtstrahlen, die auf die Optikflächen auftreffen, in ihre Einfallsrichtung zurück reflektiert werden. Diese Optikflächen des Rückstrahler sind, wie bei sonst an Kraftfahrzeugen oder Fahrrädern üblichen Rückstrahlen, die aus lichtdurchlässigen Material hergestellt sind und bei denen die Optikflächen auf der der Abschlussscheibe abgewandten Seite angeordnet sind, so klein ausgeführt, dass für einen Betrachter der Leuchte der Rückstrahler, wie üblich, als brillante, klein strukturierte Oberfläche zu sehen ist. Diese bekannten Rückstrahler sind im Volksmund unter dem Begriff "Katzenauge" bekannt.

Eine lichttechnische Einrichtung für Fahrzeuge ist aus der DE 198 23 106 A1 bekannt. Als lichttechnische Einrichtung dient eine Leuchte, die mehrere Leuchtenkammern aufweist. Die Leuchtenkammern sind von einem aus Kunststoff bestehenden gemeinsamen Lichtgehäuse und einer das Lichtgehäuse abdeckenden Abschlußscheibe gebildet. Die Rückseite des Lichtgehäuses selbst bilden schalenförmige Reflektoren, denen jeweils eine Lampe zugeordnet ist. Die Abschlußscheibe besteht aus mehreren aneinander gespritzten Lichtscheibenabschnitten, die unterschiedlich eingefärbt sind. Einer Lichtkammer ist ein rot eingefärbter Lichtscheibenabschnitt zugeordnet, an dem eine einen Rückstrahler halternde Abdichtplatte durch Ultraschallschweißen angebracht ist. Der Rückstrahler ist von einer Zwischenscheibe gebildet, die von der Abdichtplatte auf der der Abschlußscheibe zugewandten Seite gehaltert ist. Die Zwischenscheibe weist auf der der Abschlußscheibe abgewandten Seite rückstrahlende Optikflächen auf, welche zum Beispiel von Tripeln oder Würfelekken gebildet sind und welche von außen durch die Abschlußscheibe hindurchtretende und in die Zwischenscheibe eintretende Lichtstrahlen total reflektieren. Ein zur Zwischenscheibe benachbart verlaufender Abschnitt der Abschlußscheibe weist außen und innen eine glatte Oberfläche auf. Hierbei ist es nachteilig, daß der Rückstrahler selbst und die Abdichtplatte ein zusätzliches Teil sind und für das Festsitzen der Abdichtplatte an der Abschlußscheibe ein gesondertes Verfahren, wie zum Beispiel Ultraschallschweißen, notwendig ist.

Weiterhin kann ein in dieser Art an der Abschlußscheibe angebrachter Rückstrahler aus optischen Gründen unerwünscht sein, da die Anbindungsstellen von der den Rückstrahler halternden Abdichtplatte von außen deutlich zu sehen sind.

Aufgabe der Erfindung ist es, die im Oberbegriff des Anspruchs 1 beschriebene Leuchte für Fahrzeuge derart zu gestalten, dass für einen Betrachter der Einrichtung der Rückstrahler ein vom üblichen abweichendes Erscheinungsbild aufweist und trotzdem weiterhin die Funktion des Rückstrahlers sicher ist. Diese Aufgabe wird nach der Erfindung durch die Merkmale des kennzeichnenden Teils des Anspruchs 1 gelöst.

Der Rückstrahler kann aus lichtdurchlässigem oder opakem Werkstoff bestehen. Somit kann ein den Rückstrahler aufweisender Wandabschnitt einstückig mit einem Reflektor oder einer Abdeckblende ausgeführt sein. In diesem Zusammenhang ist es vorteilhaft, wenn die Reflexionsschicht der Optikflächen in einer Reflexionsschicht des Reflektors bzw. eine verspiegelte Oberfläche der Abdeckblende übergeht. Dadurch entfällt ein zusätzliches Aufbringen der Reflexionsschicht auf die Optikflächen des Rückstrahlers. Der Rückstrahler kann auch von einem Wandabschnitt des Lichtgehäuses gebildet sein.

Der den Rückstrahler bildende Wandabschnitt dient zusätzlich als Abdeckblende, wenn er benachbart zur Lichtaustrittsöffnung des Reflektors verläuft und an den vorderen Randabschnitt des Reflektors angeformt ist und sich bis zu einem vorderen Randabschnitt des Lichtgehäuses hin erstreckt. Dadurch kann der Reflektor in seinem die Lichtaustrittsfläche begrenzenden Rand beliebig geformt sein.

Bei einem eine Fahrzeugsseite markierenden Rückstrahler ist es vorteilhaft, wenn dieser in eine Blinkleuchte integriert ist und an einer zur Fahrzeugseite hin gerichteten Oberfläche eines seitlichen Wandabschnitts der Blinkleuchte angeordnet ist. Die Reflexionsschicht der Optikflächen des Rückstrahlers und die Reflexionsfläche des Reflektors sind zusammen auf einen Reflektor aufbringbar, wenn der seitliche Wandabschnitt einstückig an den Reflektor angeformt ist. Hierbei kann die Abschlußscheibe der Blinkleuchte bzw. eine im Innem der Blinkleuchte angeordnete Zwischenscheibe gelb eingefärbt ein.

Die lichttechnische Einrichtung kann von einem Scheinwerfer, einer vorderen Blinkleuchte, einer Heckleuchte oder ein Seitenmarkierungsrückstrahler gebildet sein.

Zwei Ausführungsbeispiele nach der Erfindung sind in der Zeichnung dargestellt und zeigen:
Figur 1 in einer Vorderansicht eine Heckleuchte für Fahrzeuge mit mehreren Leuchtenkammern;
Figur 2 einen Schnitt nach der Linie A-A durch eine Blinkleuchte der Heckleuchte in Figur 1 mit einem roten und gelben Rückstrahler;
Figur 3 in einer Vorderansicht eine andere Heckleuchte für Fahrzeuge,
Figur 4 in einem Schnitt nach der Linie B-B in Figur 3 eine Schlußleuchte mit einem roten Rückstrahler
Figur 5 in einer Vorderansicht eine weitere Heckleuchte für Fahrzeuge,
Figur 6 einen Schnitt nach der Linie C-C in Figur 5 durch einen Rückstrahler in vergrößerten Maßstab und
Figur 7 in einer Vorderansicht einen Teil des Rückstrahlers von Figur 5 und 6.

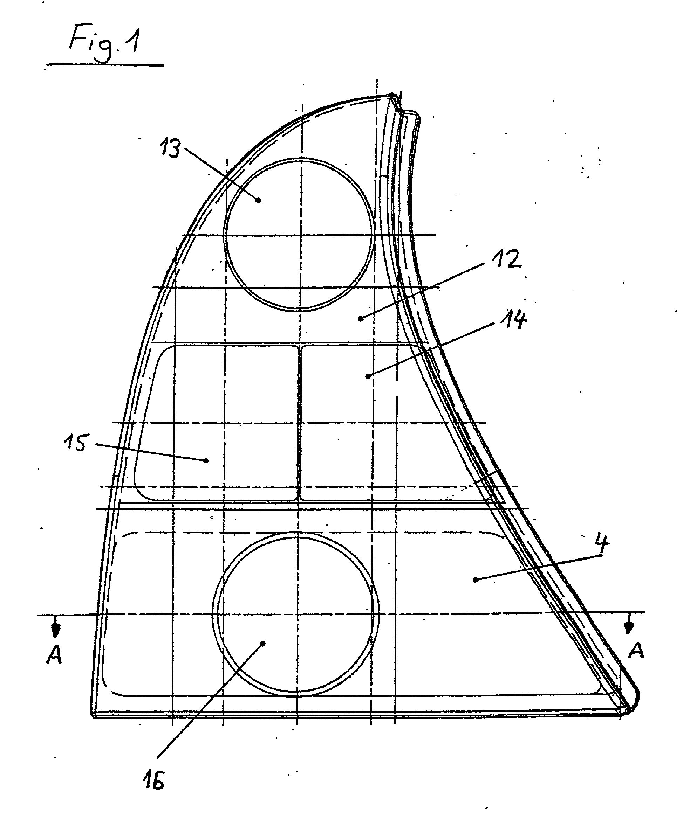

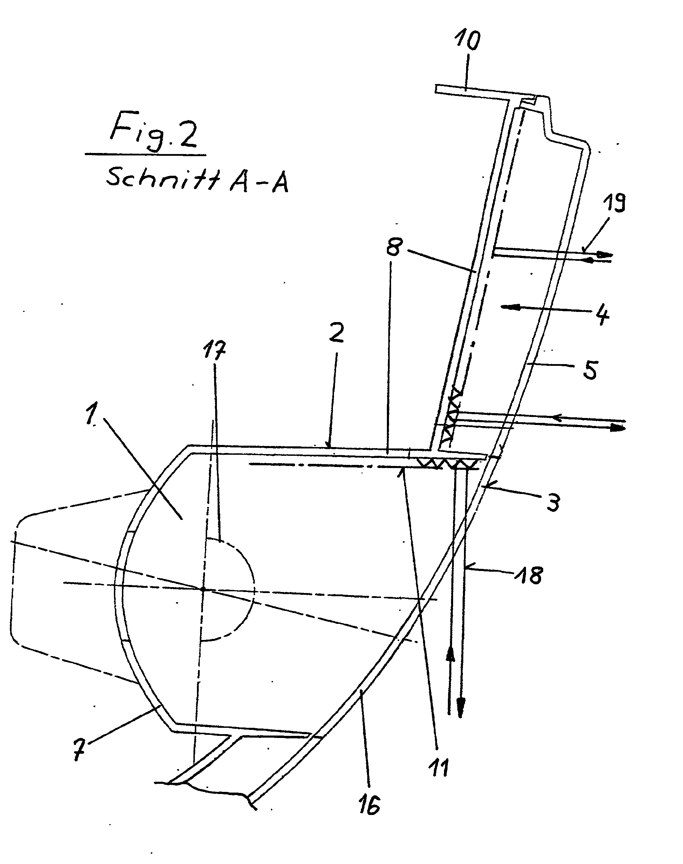

In den Figuren 1 und 2 ist eine Heckleuchte für Fahrzeuge dargestellt, welche mehrere Leuchtenkammern 1 aufweist. Die Leuchtenkammern 1 sind von einem gemeinsamen Lichtgehäuse 2 und einer gemeinsamen Abschlußscheibe 3 gebildet. Das Lichtgehäuse 2 und die Abschlußscheibe 3 sind aus Kunststoff geformt. Die Abschlußscheibe 3 weist einen rot eingefärbten rahmenartigen Grundkörper 12 auf, in dessen Fenster Lichtscheibenabschnitte 13, 14, 15 und 16 für Brems-, Schluß-, Rückfahr- und Blinklicht eingespritzt sind. Der Lichtscheibenabschnitt 16 ist gelb eingefärbt und optikfrei ausgeführt. Ebenso ist der den gelben Lichtscheibenabschnitt 16 umgebende Bereich 5 des rahmenartigen Grundkörpers 12 optikfrei ausgeführt. Das Lichtgehäuse 2 weist einen dem gelben Lichtscheibenabschnitt 16 zugeordneten schalenförmigen Reflektor 7 auf, der von der Rückseite des Lichtgehäuses 2 gebildet ist. In dem Scheitelbereich des Reflektors 7 ist eine Öffnung zur Aufnahme einer Lampe 17 eingebracht. Die Rückseite des Lichtgehäuse 2 weist angrenzend an den schalenförmigen Reflektor 7 abgeflachte Wandabschnitte 8 auf, zwischen welchen der Reflektor 7 angeordnet ist. Die Wandabschnitte 8 verlaufen vertikal und in Fahrzeuglängsrichtung. Einer der beiden Wandabschnitte ist länger ausgeführt und seine der Leuchtenkammer 1 zugewandte innere Oberfläche 11 ist mit Optikflächen 6 versehen, welche dem schräg verlaufenden Lichtscheibenabschnitt zugewandt ist und auf ihrer Außenseite eine verspiegelte Reflexionsschicht aufweist. Diese Reflexionsschicht geht in die verspiegelte Reflexionsschicht des schalenförmigen Reflektors 7 über. Der die Leuchtenkammer 1 begrenzende Wandabschnitt 8 ist mit seinen Optikflächen 6 zur Fahrzeugseite hin gerichtet, wenn die Leuchte am Fahrzeug angebaut ist. Seitlich von außen durch den gelben Lichtscheibenabschnitt 16 fallende Lichtstrahlen 18 werden durch eine Reflexion an der Reflexionsschicht der Optikflächen 6 um 180° umgelenkt. Die mit der Reflexionsschicht versehenen Optikflächen 6 dienen somit zusammen mit dem gelben Lichtscheibenabschnitt 16 als ein die Fahrzeugseite begrenzenden seitlichen Rückstrahler. Das Lichtgehäuse 2 weist angrenzend an die Leuchtenkammer 1 einen von der Rückseite des Lichtgehäuses 2 gebildeten ebenen Wandabschnitt 8 auf, welcher vertikal und quer zur Fahrzeuglängsachse verläuft. Dieser Wandabschnitt 8 ist dem rot eingefärbten Bereich 5 der Abschlußscheibe 3 zugeordnet und weist auf der dem Bereich 5 zugewandten Seite ebenfalls Optikflächen 6 mit einer äußeren Reflexionsschicht auf. An diesen Optikflächen 6 werden die von außen durch den roten Bereich 5 hindurchtretenden Lichtstrahlen durch Reflexion um 180° umgelenkt. Die beiden mit Optikflächen 6 versehenen ebenen Wandabschnitte 8 und der Reflektor 7 weisen auf der der Abschlußscheibe 3 zugewandten Seite eine zusammenhängende Reflexionsschicht auf.

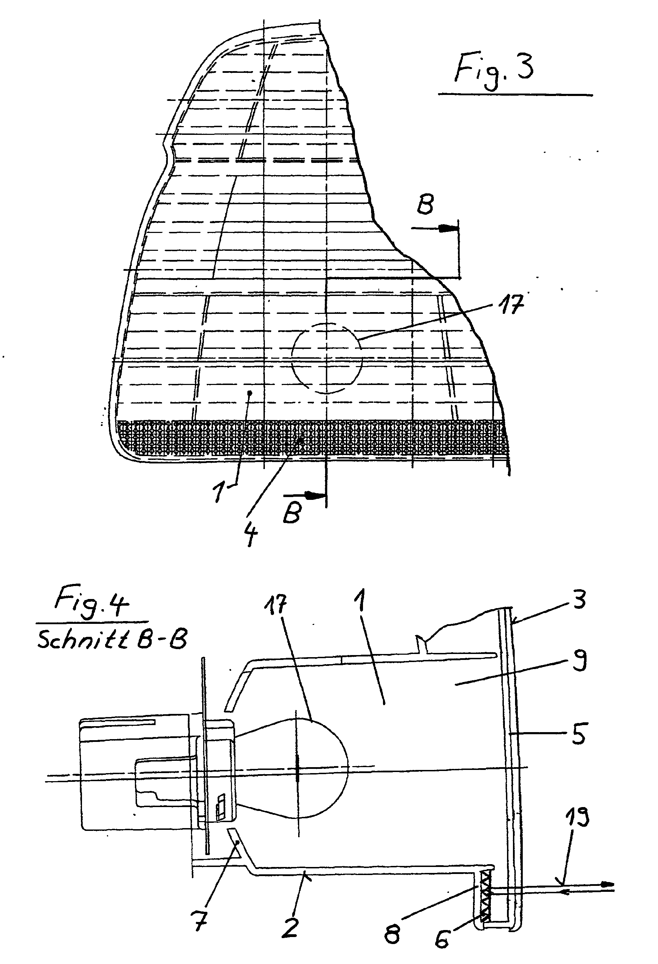

Bei der in den Figuren 3 und 4 dargestellten Heckleuchte dient die in der Leuchtenkammer 1 angeordnete Lampe 17 für Bremslicht und der der Leuchtenkammer 1 zugeordnete Bereich 5 der Abschlußscheibe 3 ist rot eingefärbt. Der rot eingefärbte Bereich 5 erstreckt sich bis unterhalb der Leuchtenkammer 1 und deckt einen an den vorderen Randabschnitt des Reflektors 7 angeformten ebenen Wandabschnitt 8 ab, der auf der dem roten Bereich zugewandten Seite mit Optikflächen 6 besetzt ist, die zusammen mit dem Reflektor 6 eine zusammenhängende verspiegelte Schicht aufweisen.

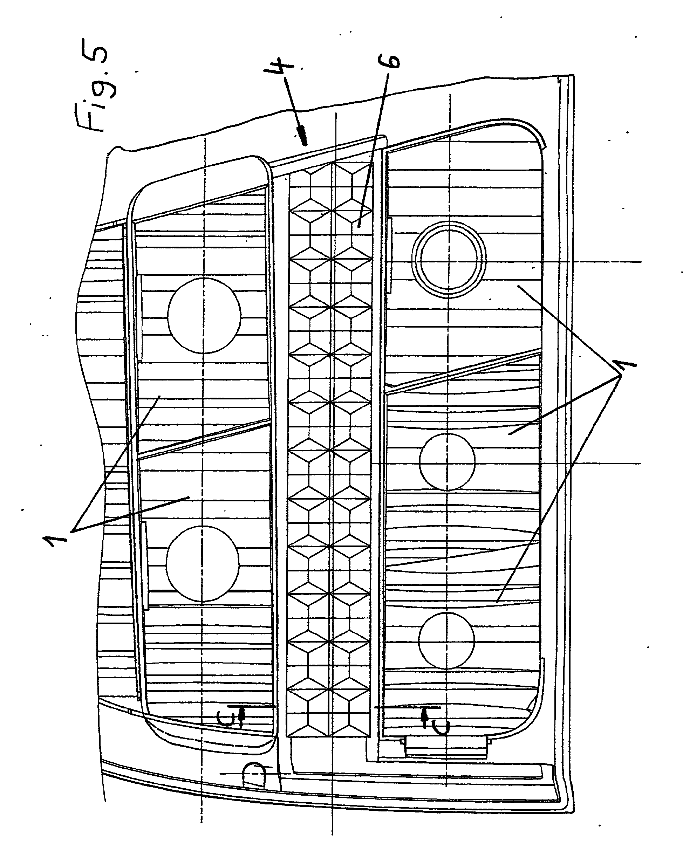

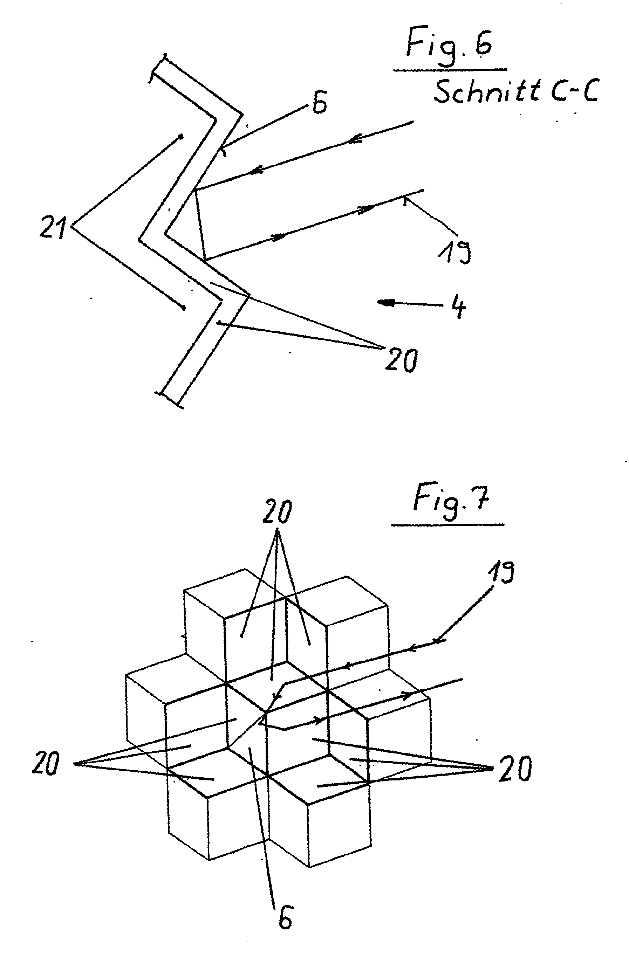

Bei der in den Figuren 5 bis 7 dargestellten Heckleuchte ist zwischen Reflektoren 7 ein Wandabschnitt 8 angeordnet, der Optikflächen 6 eines Rückstrahlers 4 aufweist. Die Optikflächen 6 sind von Würfelecken 20 gebildet und weisen eine Reflexionsschicht auf. Der Wandabschnitt 8 und die Reflektoren 7 sind von der Rückseite eines Lichtgehäuses 2 gebildet. Die Würfelecken 20 weisen senkrecht zur Hauptfläche des Rückstrahlers 4 gesehen eine rechteckige Projektionsfläche auf mit den Außenmaßen 8mm und 14mm. Die von den Würfelecken 20 gebildeten Optikelemente sind in Zeilen angeordnet. Bei der Heckleuchte sind wegen den sehr groß ausgeführten Optikelementen nur zwei nebeneinander angeordnete Zeilen notwendig. Weiterhin erscheint der Rückstrahler wegen den großen Optikelementen aus vielen Richtungen brillant. Damit die großen Würfelecken 20 wegen einer Materialanhäufung keine Einfallstellen an ihren Optikflächen 6 aufweisen, sind diese auf ihrer Rückseite mit einem Hohlraum 21 versehen. Bedingt durch den Hohlraum 21 weisen die Würfelecken 20 an ihren Seiten eine gleich dicke Wandstärke aufweisen.

### Bezugszeichenliste

- 1.: Leuchtenkammern
- 2.: Lichtgehäuse
- 3.: Abschlußscheibe
- 4.: Rückstrahler
- 5.: Bereich
- 6.: Optikflächen
- 7.: Reflektor
- 8.: Wandabschnitt
- 9.: Lichtaustrittsöffnung
- 10.: Randabschnitt
- 11.: Oberfläche
- 12.: Grundkörper
- 13.: Lichtscheibenabschnitt
- 14.: Lichtscheibenabschnitt
- 15.: Lichtscheibenabschnitt
- 16.: Lichtscheibenabschnitt
- 17.: Lampe
- 18.: Lichtstrahlen
- 19.: Lichtstrahlen
- 20.: Würfelecken
- 21.: Hohlraum

## Patentansprüche

1. Lichttechnische Einrichtung für Fahrzeuge, insbesondere Leuchte für Kraftfahrzeuge mit einem Lichtgehäuse (2), mit einer lichtdurchlässigen Abschlußscheibe (3) und mit einem im Inneren der Einrichtung angeordneten Rückstrahler (4), weicher auf einer Seite mit einer Vielzahl von Optikflächen (6) versehen ist, wobei die Abschlußscheibe (3) zumindest einen optikfreien und glatten Bereich (5) für den Rückstrahler (4) aufweist, und der Rückstrahler mit der die Optikflächen (6) aufweisenden Seite der Abschlußscheibe (3) zugewandt ist und auf dieser Seite eine auf die Optikflächen (6) aufgebrachte Reflexionsschicht aufweist, an welcher Lichtstrahlen (18, 19) nach einer mehrfachen Reflexion in ihre Einfallsrichtung zurück reflektieren, **dadurch gekennzeichnet, dass** die Optikflächen (6) , des Rückstrahlers (4) von an einem Eck eines Würfels angrenzenden Seitenflächen gebildet sind, die eine gleich dicke Wandstärke aufweisen und der Eck des Würfels mindestens eine Abmessung von 6 mm aufweist.

2. Lichttechnische Einrichtung nach Anspruch 1, **dadurch gekennzeichnet, daß** zumindest der glatte Bereich (5) der Abschlußscheibe (3), dem der Rückstrahler (4) zugeordnet ist, eine den Farbton des Rückstrahlers (4) bestimmende Farbe aufweist.

3. Lichttechnische Einrichtung nach Anspruch 1 oder 2, **dadurch gekennzeichnet, daß** die Optikflächen (6) von einem einstückig mit einem Reflektor (7) ausgeführten Wandabschnitt (8) gebildet sind und der Reflektor (7) und der Wandabschnitt (8) aus opakem Werkstoff bestehen und eine zusammenhängende Reflexionsschicht aufweisen.

4. Lichttechnische Einrichtung nach Anspruch 3, **dadurch gekennzeichnet, daß** der die Optikflächen (6) aufweisende Wandabschnitt (8) benachbart zur Lichtaustrittsöffung des Reflektors (7) verläuft.

5. Lichttechnische Einrichtung nach Anspruch 4, **dadurch gekennzeichnet, daß** der mit den Optikflächen (6) versehene Wandabschnitt (8) den Reflektor (7) zumindest abschnittsweise umgibt und sich bis zu einem vorderen Randabschnitt (10) des Lichtgehäuses (2) hin erstreckt.

6. Lichttechnische Einrichtung nach Anspruch 3, **dadurch gekennzeichnet, daß** bei einer im Eckbereich eines Fahrzeugs anordnebaren Blinkleuchte eine zur Fahrzeugseite hin gerichtete Oberfläche (11) eines seitlichen Wandabschnitts (8) mit den Optikflächen (6) versehen ist.

7. Lichttechnische Einrichtung nach einem der Ansprüche 3 bis 6, **dadurch gekennzeichnet, daß** der die Optikflächen (6) aufweisende Wandabschnitt (8) und der Reflektor (7) von der Rückseite des Lichtgehäuses (2) gebildet sind.

8. Lichttechnische Einrichtung nach einem der Ansprüche 3 bis 6, **dadurch gekennzeichnet, daß** der Wandabschnitt (8) aus einem anderen Werkstoff als der ihn tragende Teil hergestellt ist.

9. Lichttechnische Einrichtung nach Anspruch 1 oder 2 **dadurch gekennzeichnet, daß** eine im Innern der Einrichtung angeordnete Abdeckblende auf der der Abschlußscheibe zugewandten Seite an einem Wandabschnitt die Optikflächen aufweist, wobei die Optikflächen und die Abdeckblende mit einer zusammenhängenden Reflexionsschicht versehen sind.

10. Lichttechnische Einrichtung nach Anspruch 1 oder 2, **dadurch gekennzeichnet, daß** das Lichtgehäuse (2) an einem Wandabschnitt (8) die Optikflächen (6) aufweist.

## Claims

1. Vehicle lighting assembly, in particular a lamp for motor vehicles, comprising a lamp housing (2) with a transparent front pane (3) and a reflex reflector (4) arranged inside the assembly, which reflex reflector (4) is provided on one side with a multiplicity of lens faces, the front pane (3) having at least one lens-free smooth area (5) for the reflex reflector (4), the side of the reflex reflector that has the lens faces (6) facing towards the front pane (3) and the reflex reflector having on this side a reflective coating by which light rays (18, 19) are reflected back into their incident direction after multiple reflection, **characterised in that** the lens faces of the reflex reflector (4) are formed by side faces adjacent to a corner of a cube, which side faces have an equal wall thickness while the corner of the cube has a dimension of at least 6 mm.

2. Lighting assembly according to claim 1, **characterised in that** at least the smooth area (5) of the front pane (3) with which the reflex reflector (4) is associated has a colour that determines the colour tone of the reflex reflector (4).

3. Lighting assembly according to claim 1 or 2, **characterised in that** the lens faces (6) are formed by a wall section (8) constructed in one piece with a reflector (7) and the reflector (7) and the wall section (8) are made of opaque material and have a continuous reflective coating.

4. Lighting assembly according to claim 3, **characterised in that** the wall section (8) having the lens faces (6) is disposed adjacent to the light exit aperture of the reflector (7).

5. Lighting assembly according to claim 4, **characterised in that** the wall section (8) provided with the lens faces (6) surrounds the reflector (7) at least partially and extends up to a front edge section (10) of the lamp housing (2).

6. Lighting assembly according to claim 3, **characterised in that** in the case of a direction indicator that can be arranged in the corner region of a vehicle a surface (11) of a lateral wall section (8) facing to the side of the vehicle is provided with the lens faces (6).

7. Lighting assembly according to any one of claims 3 to 6, **characterised in that** the wall section (8) having the lens faces (6) and the reflector (7) are formed by the rear face of the lamp housing (2).

8. Lighting assembly according to any one of claims 3 to 6, **characterised in that** the wall section (8) is manufactured from a different material to that of the part supporting it.

9. Lighting assembly according to claim 1 or 2, **characterised in that** an occluding screen arranged inside the assembly has the lens faces on a wall section on a side facing towards the front pane, the lens faces and the occluding screen being provided with a continuous reflective coating.

10. Lighting assembly according to claim 1 or 2, **characterised in that** the lamp housing (2) has the lens faces (6) on a wall section (8).

## Revendications

1. Dispositif technique d'éclairage pour véhicules, notamment feu d'éclairage pour véhicules automobiles, comprenant un carter ou boîtier d'éclairage (2), une vitre de fermeture (3) transparente à la lumière, et un catadioptre (4) qui est disposé à l'intérieur du dispositif et est pourvu, sur un côté, d'un grand nombre de surfaces optiques (6), la vitre de fermeture (3) présentant au moins une zone (5) lisse et exempte d'optiques pour le catadioptre (4), et le catadioptre étant dirigé, avec son côté qui comporte les surfaces optiques (6), vers la vitre de fermeture (3), et présentant sur ce côté, une couche réfléchissante qui est appliquée sur les surfaces optiques (6) et sur laquelle des rayons lumineux (18, 19) sont réfléchis en retour dans leur direction d'incidence, après une réflexion multiple,
**caractérisé en ce que** les surfaces optiques (6) du catadioptre (4) sont formées par des surfaces latérales adjacentes d'une arête de coin d'un dé, qui présentent une épaisseur de paroi identique, et **en ce que** l'arête de coin du dé présente une dimension d'au moins 6 mm.

2. Dispositif technique d'éclairage selon la revendication 1, **caractérisé en ce qu'**au moins la zone lisse (5) de la vitre de fermeture (3), à laquelle est associé le catadioptre (4), présente une couleur définissant la teinte du catadioptre (4).

3. Dispositif technique d'éclairage selon la revendication 1 ou 2, **caractérisé en ce que** les surfaces optiques (6) sont formées par un tronçon de paroi (8) réalisé d'un seul tenant avec un réflecteur (7), et le réflecteur (7) et le tronçon de paroi (8) sont réalisés en un matériau opaque, et présentent une couche réfléchissante continue.

4. Dispositif technique d'éclairage selon la revendication 3, **caractérisé en ce que** le tronçon de paroi (8) présentant les surfaces optiques (6) s'étend au voisinage de l'ouverture d'émergence de la lumière du réflecteur (7).

5. Dispositif technique d'éclairage selon la revendication 4, **caractérisé en ce que** le tronçon de paroi (8) pourvu des surfaces optiques (6) entoure le réflecteur (7) au moins sur certains tronçons, et s'étend jusqu'au tronçon de bordure avant (10) du carter ou boîtier d'éclairage (2).

6. Dispositif technique d'éclairage selon la revendication 3, **caractérisé en ce que** dans le cas d'un feu clignotant ou indicateur de changement de direction disposé dans une zone de coin d'un véhicule, une surface (11) d'un tronçon de paroi (8) latéral, qui est dirigée vers le côté du véhicule, est pourvue des surfaces optiques (6).

7. Dispositif technique d'éclairage selon l'une des revendications 3 à 6, **caractérisé en ce que** le tronçon de paroi (8) présentant les surfaces optiques (6), et le réflecteur (7) sont formés par le côté arrière du carter ou boîtier d'éclairage (2).

8. Dispositif technique d'éclairage selon l'une des revendications 3 à 6, **caractérisé en ce que** le tronçon de paroi (8) est fabriqué en un matériau différent de celui de la partie qui le supporte.

9. Dispositif technique d'éclairage selon la revendication 1 ou 2, **caractérisé en ce qu'**un masque de recouvrement disposé à l'intérieur du dispositif présente les surfaces optiques sur un tronçon de paroi, sur le côté dirigé vers la vitre de fermeture, les surfaces optiques et le masque de recouvrement étant pourvus d'une couche réfléchissante continue.

10. Dispositif technique d'éclairage selon la revendication 1 ou 2, **caractérisé en ce que** le carter ou boîtier d'éclairage (2) comporte les surfaces optiques (6) sur un tronçon de paroi (8).
